# EUROPEAN PATENT SPECIFICATION

(11) **EP 4 302 006 B1**
(45) Date of publication and mention of the grant of the patent: **09.07.2025**
(21) Application number: 22729487.3
(22) Date of filing: 13.05.2022
(51) Int. Cl.: F16L 33/22

(54) **CONNECTOR**
VERBINDER
CONNECTEUR

(30) Priority: 14.05.2021 GB 202106905
(43) Date of publication of application: 10.01.2024
(73) Proprietor: Rivendale Products Ltd, Hampshire SO52 9DF (GB)
(72) Inventor: WILKINSON, Jason, Eastleigh Hampshire SO50 5GE (GB)
(74) Representative: Bryers Intellectual Property Ltd
(86) International application number: PCT/EP2022/063021
(87) International publication number: WO 2022/238561

(56) References cited:
- EP-A1- 1 788 294
- KR-A- 19980 014 570
- US-B2- 8 360 478

## Description

### Field

The present invention relates to a connector; in particular, the present invention relates to a garden hose connector.

### Background

Gardeners routinely need to attach the free end of a garden hose to a connector in order that the connector may connect the hose with a tap, spray nozzle, sprinkler, or the like.

Prior art hose connectors typically require for a hose to be inserted over a plurality of projections arranged in a circular configuration. This can be tricky for elderly users and/or any person with limited dexterity. Such projections may also be subject to breakage if a user does not position a free end of a hose correctly. IFT

KR 1998-014570 A discloses a hose connector having a body with an insertion portion formed on one side configured to have a hose inserted thereon. Two clamps are pivotably installed in the body and form an outer tapered thread in a clamping state. A nut with matching inner tapered thread is screwed on the clamps in order to hold the hose to the boby.

EP 1788294 A1 discloses a hose connector comprising an insertion portion to be inserted in the hose. Two sleeve halves forming together an outer cylindrical thread are mounted on the hose and a matching threaded sleeve is screwed on the mounted sleeve halves.

The present invention seeks to improve upon the prior art.

### Summary

The present invention provides a garden hose connector, having a first end and a second end, comprising: a main body having an insert over which a free end of a hose may be positioned by a user; a pair of clamping members pivotally attached to the main body and moveable between an open position and a closed position; wherein: when the clamping members are in their open position a user may position the insert inside a free end of a hose or remove the insert therefrom; when the clamping members are in their closed position the members are effective to clamp a portion of the hose against the insert; a fastener configurable to releasably lock the members in their closed position; each of the clamping members comprises a free end section, when the clamping members are in their closed position the free end sections of the clamping members together form a cylindrical, externally threaded portion, and the fastener comprises a substantially cylindrical ring member having an internal screw thread arrangement co-operable with said cylindrical, externally threaded portion to enable the fastener to be screwed onto the clamping members to lock them in a closed configuration.

Providing a pair of clamping members that clamp hose against a hose insert allows a user to easily and securely attach a connector to a hose. In some embodiments the insert is substantially cylindrical. The provision of pivoting members allows for a user to readily clamp a hose using leverage applied adjacent second ends of the members. This is of particular benefit to users with limited hand strength.

In an example, the garden hose connector comprises a longitudinal direction and a transverse direction, the connector defining a fluid conduit therethrough, in the longitudinal direction, and wherein a hose to which the connector is fitted extends from the second end of the connector.

In an example, the insert has a body portion that fluidly connects the first end of the connector to an outlet of a terminal portion of the insert.

In an example, the insert is substantially cylindrical and an outer surface of each of the body portion and the terminal portion tapers inwardly towards the longitudinal axis as the insert extends towards the second end of the connector, with a shoulder formed between the body portion and the terminal portion such that the end of the terminal portion closer to the first end of the connector has a diameter that is greater than the diameter of the end of the body portion that is closer to the second end of the connector.

In an example, each of the clamping members comprises a body section, from which the free end section extends, and a shoulder present between the free end section and the body section of each clamping member provides a stop for the clamping member fastener.

In an example, the insert terminates within the extent of the body section.

In an example, the clamping members are attached at or adjacent first ends thereof to the main body.

In a specific example, the clamping members are releasably attached at or adjacent first ends thereof to the main body. The provision of releasably attachable clamping members reduces the likelihood of breakage in the event of a clamping member being incorrectly displaced.

Each clamping member may comprise a pair of nubs that are configured to releasably mate with corresponding pairs of recesses on the main body.

The pairs of recesses of the main body for releasably receiving the pairs of nubs of the clamping members may extend substantially in the transverse direction.

In an example, each clamping member has a first end surface, and when in the closed position, the first end surface of each clamping member extends at an angle from the transverse direction such that it is generally sloping outwards of the longitudinal axis of the connector and towards the second end of the connector, and when in the open position, the first end surface of each clamping member extends in the transverse direction.

In an example, the main body comprises, at the first end of the garden hose connector, a snap-fit assemblage comprising an inner connection arrangement and an outer connection collar that are co-operable to together provide a female part of a two-part snap-fit releasable connection arrangement, that is usable to releasably attach the connector to a corresponding male part of the two-part snap-fit releasable connection arrangement associated with another object such as a tap adaptor, spray nozzle, sprinkler, or the like.

In an example, a base end of the inner connection arrangement of the main body has a surface that provides a stop for rotation of the clamping members during pivoting into the open position.

In an example, each clamping member is substantially semicylindrical.

In an example, each clamping member comprises a gripping arrangement comprising at least one grip on an internal face of the clamping member, the grip being adapted to clamp the hose against the insert.

In an example, at least one said grip defines a semi-circular recess in which hose is clamped.

In an example, a grip on a first clamping member and a grip on a second clamping member together define a substantially circular recess within which hose is clamped.

In an example, the gripping arrangement of each clamping member comprises a plurality of grips that are spaced apart in a longitudinal direction of the clamping member.

In an example, at least one said grip is substantially planar.

In an example, the gripping arrangement of each clamping member comprises a plurality of spaced-apart grips that are each substantially planar and located in planes that are substantially orthogonal to a longitudinal axis of the clamping member.

In an example, the gripping arrangement of each clamping member comprises a shoulder grip positioned to locate beside the shoulder of the insert when the clamping member is in the closed position.

In an example, the gripping arrangement of each clamping member further comprises grips that are spaced apart in a circumferential direction of the clamping member.

The provision of a plurality of spaced-apart grips allows for a section of hose to be clamped in multiple locations so as to enhance the strength of the connection.

In an example, the garden hose connector comprises a water stop valve at an outlet for water from the hose.

A clamping member made in accordance with the garden hose connector is disclosed. Also disclosed is a main body made in accordance with the garden hose connector.

### Brief Description of the Accompanying Drawings

In order that the present invention may be more fully understood a specific embodiment will now be described by way of example with reference to the accompanying schematic drawings, of which:
**Figure 1** is a side view of a connector made in accordance with a first example of the present invention, with its clamping members in an open position;
**Figure 2** is a view of the connector of Figure I illustrating how a hose may be fitted over the insert of the connector of Figure 1;
**Figure 3** is a view of the connector of Figure with its clamping members in a closed position;
**Figure 4** is a view of the connector of Figure 3 illustrating how its clamping members may be reliably fastened in their closed position;
**Figure 5** is a perspective view of a clamping member of the connector of Figures I to 4;
**Figure 6** is a view of the main body of the connector of Figures I to 4 with its release collar omitted;
**Figure 7** is a perspective view of the clamping member of Figure 5 attached to the main body of Figure 6;
**Figure 8** is a side view of the clamping member of Figure 5 attached to the main body of Figure 6;
**Figure 9** is a perspective view of the fastener of the connector of Figures I to 4;
**Figure 10** shows a connector made in accordance with a second example of the present invention, with pivotable clamping members thereof in a closed position, surrounding an insert, and a rotatable clamping member fastener thereof in a securing condition;
**Figure 11** shows the connector of Figure 10, with the pivotable clamping members thereof in an open position, revealing the insert, and the rotatable clamping member fastener thereof in a release condition;
**Figures 12-14** show stages during fitting a hose to the connector of Figure 10;
**Figure 15** shows a main body of the connector of Figure 10;
**Figure 16** shows the pivotable clamping members of the connector of Figure 10;
**Figure 17** shows the main body of Figure 15 with the pivotable clamping members of Figure 16 connected thereto;
**Figures 18 & 19** show alternative views of a pivotable clamping member of the connector of Figure 10;
**Figures 20-23** shows alternative views of the main body of Figure 15 with the pivotable clamping member of Figures 18 & 19 connected thereto;
**Figure 24** shows the connector of Figure 10 with the clamping members in the closed position, and the clamping member fastener in a releasing condition; and
**Figure 25** shows the clamping member fastener of the connector of Figure 10.

### Description

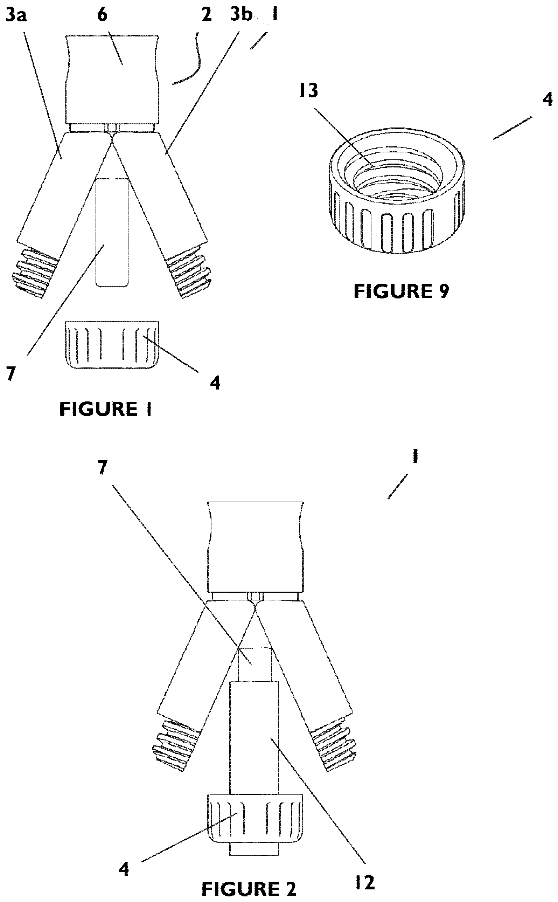

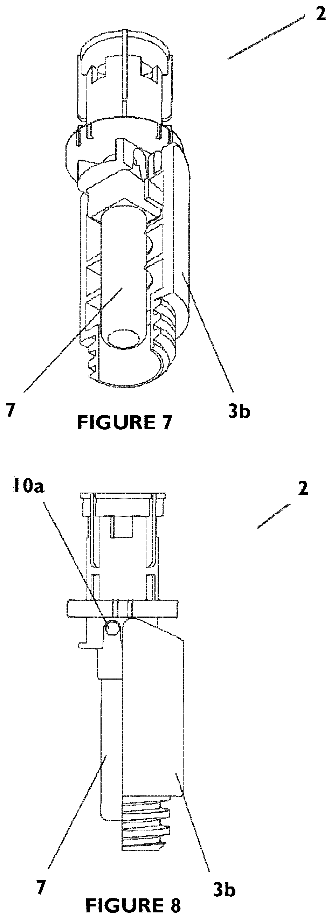

Features of a first example of the present invention will now be described with reference to **Figures 1-10****.**

A connector 1 comprises a main body 2, a pair of clamping arms 3a, 3b and a fastener 4. Main body 2 has at a first end a snap fit assemblage 5 with associated release collar 6. Snap fit assemblage 5 is adapted to releasably attach connector 1 to a male connector part (not shown) that forms part of another object such as a tap adaptor, spray nozzle, sprinkler, or the like. Release collar 6 allows a user to disengage assemblage 5 from a male connector part. Snap fit assemblage 5 comprises a water stop valve. Such arrangements are well-known in the field of garden hoses.

Main body 2 further comprises a hose insert 7 that extends from assemblage 5 to terminate in opening 7a at its free end. Insert 7 is substantially cylindrical and is elongate. Insert 7 is hollow such that it provides a conduit between assemblage 5 and opening 7a at the free end of insert 7. Insert 7 is sized so as to be inserted into the tubular cavity of a garden hose.

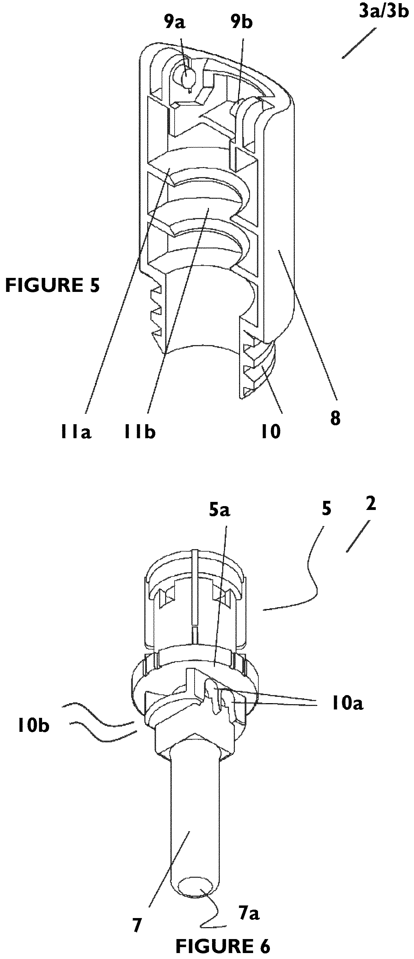

Pivotally attached to main body 2 adjacent base 5a of assemblage 5 are clamping members 3a, 3b. Members 3a, 3b are identical in size and shape and are illustrated in detail in Figure 5. Members 3a, 3b are each elongate and comprise substantially semicylindrical wall 8.

Adjacent a first end members 3a, 3b each comprise a pair of nubs 9a, 9b that are configured to releasably mate with corresponding pairs of recesses 10a, 10b on main body 2 such that members 3a, 3b are pivotally attached to main body 2 adjacent base of assemblage 5. At a second end members 3a, 3b each comprise a screw thread section 10 that is formed on an outer surface of the respective members.

Extending from an inner surface of wall 8 and located intermediate first and second ends of members 3a, 3b are positioned grips 11a, 11b. Grips 11a, 11b are each substantially planar, and extend in parallel planes that are substantially orthogonal to the longitudinal axis of elongate members 3a, 3b. Grips 11a, 11b are spaced apart from each other by approximately 1cm. In other embodiments grips may be spaced apart by a distance in the region of 1cm to 4cm, or 2cm to 3cm. Grips 11a, 11b are each substantially C-shaped such that they define semi-circular recesses within which a hose may be clamped against insert 7. Together the grip 11a of member 3a and the grip 11a of member 3b define a substantially circular recess within which hose is clamped. Similarly the grip 11b of member 3a and the grip 11b of member 3b define a substantially circular recess within which hose is clamped.

Connector 1 further comprises a fastener 4 that is used to releasably lock members 3a 3b in a closed configuration. Fastener 4 is of a type well-known in the fields of garden hose connectors, and comprises a substantially cylindrical ring having an internal screw thread 13.

Turning to connector 1 in use, a user first threads fastener 4 onto a hose to which connector 1 is to be attached. With members 3a, 3b in an open position (as illustrated in Figures 1 and 2) the user then positions insert 7 inside the tubular cavity of hose 12. Approximately 4cm of hose may be extended over insert 7. In other embodiments an insert may be configured to extend into a hose by at least 2cm, by at least 3cm, by at least 4cm, by at least 5cm by at least 7.5cm or by at least 10cm.

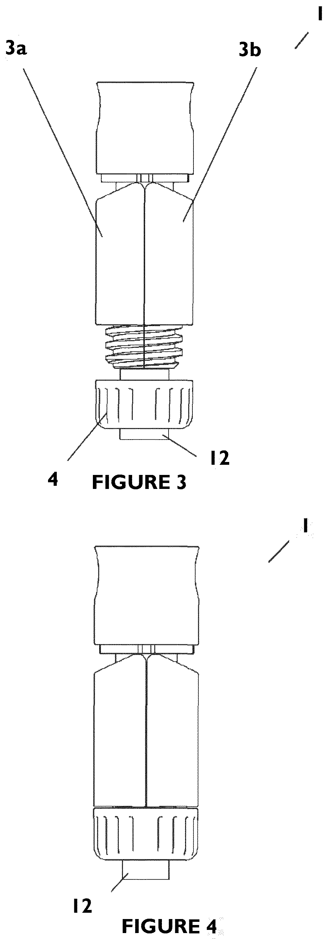

Clamping members 3a, 3b may then be pivoted to a closed position (as illustrated in Figure 3) such that hose 12 is clamped between grips 11a, 11b and the external surface of insert 7. Together the sections of screw thread 10 of members 3a, 3b form a cylindrical portion to which fastener 4 may be screwed onto (as illustrated in Figure 4) thereby locking members 3a, 3b in a closed configuration. Beneficially, as clamping members comprises two sets of spaced apart grips 11a, 11b hose 12 is clamped in two separate places. This means that even if hose 12 slips from first grips 11a, it may still be retained by second grips 11b.

To detach hose 12 from connector 1 a user simply unscrews fastener 4 from the members 3a, 3b and pivots members 3a, 3b to an open position so as to release hose 12.

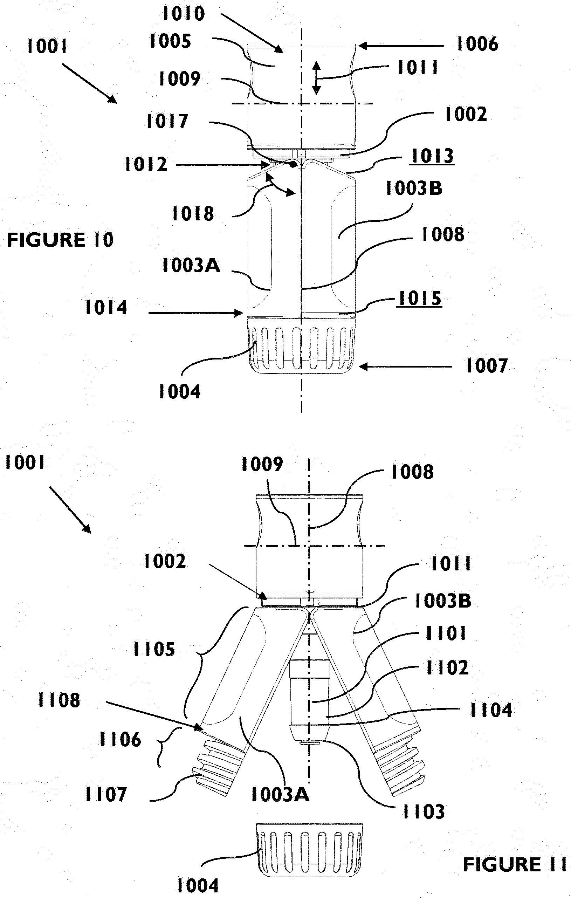

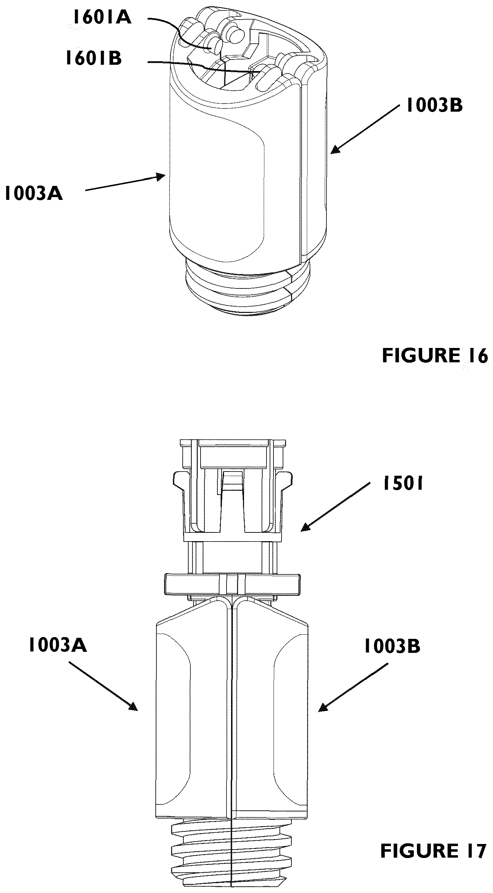

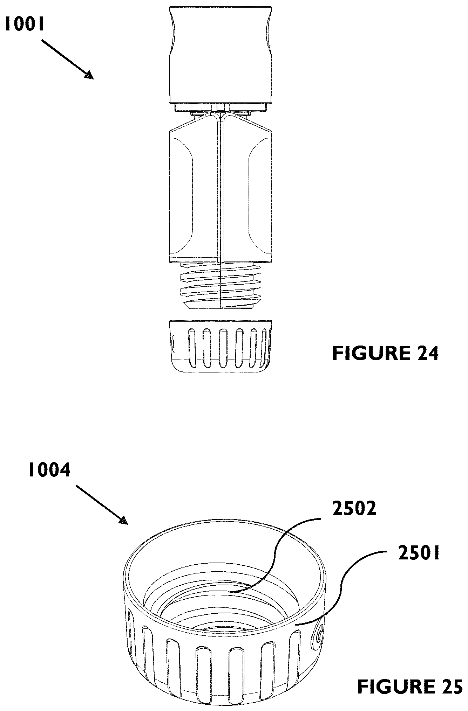

Features of a second example of the present invention will now be described with reference to **Figures 10-25****.**

Referring initially to Figures 10, 11, 15, 16, 18 & 25, a connector 1001 is shown that comprises a main body 1002, a pair of clamping members 1003A, 1003B, a clamping member fastener 1004 and a connection collar 1005.

The connector 1001 has a first end 1006 and a second end 1007. As indicated, the connector 1001 also has a longitudinal direction, indicated by axis 1008, and a transverse direction, indicated by axis 1009. The connector 1001 defines a fluid conduit therethrough, in the longitudinal direction. In use, a hose to which the connector 1001 is fitted extends from the second end 1007 of the connector 1001.

The main body 1002 has at the first end 1006 a snap-fit assemblage 1010 comprising an inner connection arrangement 1501 and an outer connection collar 1005 that are co-operable to together provide a female part of a two-part snap-fit releasable connection arrangement, this being usable to releasably attach the connector 1001 to a corresponding male part (not shown) of the two-part snap-fit releasable connection arrangement associated with another object (not shown) such as a tap adaptor, spray nozzle, sprinkler, or the like. The connection collar 1005 is movably mounted on the main body 1002 to be slidable, in each of opposite longitudinal directions, between engaging and disengaging positions, as indicated by arrow 1012. The connection collar 1005 is resiliently biased, by a suitable biasing member such as a coil or leaf spring, towards the engaging position, in which the connection collar 1005 is positioned further from the second end 1007 of the connector 1001 than when in the disengaging position.

In this example, the main body 1002 comprises a water stop valve (not visible in these Figures), which may have any suitable arrangement and be located at any suitable position. In another example, the main body 1002 is not provided with a water stop valve.

Releasable connection arrangements and water stop valve arrangements are well-known in the field of garden hoses.

The main body 1002 further comprises a hose insert 1101 having a body portion 1102 that extends from the connection arrangement 1501 of the snap-fit assemblage 1010 and fluidly connects the first end 1006 of the connector 1001 to an outlet 1103 of a terminal portion 1104 of the hose insert 1101. The insert 1101 is substantially cylindrical and is elongate, with an opening in a free end thereof.

The insert 1101 is hollow such that it provides a conduit between snap-fit assemblage 1010 and outlet 1103. The insert 1101 is sized for insertion into the tubular cavity of a garden hose (not shown in Figures 10 & 11).

The clamping members 1003A, 1003B are pivotally attached to the main body 1002, adjacent a base end 1502 of the snap-fit assemblage 1010. In this example, the clamping members 1003A, 1003B are substantially identical in overall size and shape, although may comprise differences, of which nonlimiting examples are identified below. In this example, the clamping members 1003A, 1003B are independently pivotally attached to the main body 1002.

The clamping members 1003A, 1003B are each elongate and substantially semi-cylindrical in shape.

Each clamping member 1003A, 1003B has a first end 1012, having a first end surface 1013, and a second end 1014, having a second end surface 1014.

Each clamping member 1003A, 1003B comprises a body section 1105, comprising the first end surface 1013, and a free end section 1106, comprising the second end surface 1014, that extends from the body section 1105.

Each clamping member 1003A, 1003B is pivotable about a pivot axis, such as pivot axis 1017 about which clamping member 1003A is pivotable, in each of opposite directions of rotation, between open and closed positions, as indicated by arrow 1018.

Towards the first end 1012, each clamping member 1003A, 1003B comprises a pair of nubs, such as pair of nubs 1601A, 1601B of clamping member 1003A, that are configured to releasably mate with corresponding pairs of recesses, such as pair of recesses 1503A, 1503B, on the main body 1002 such that the clamping member1003A, 1003B are pivotally attached to the main body 1002 and, in this example, are adjacent the base end 1502 of the snap-fit assemblage 1010.

The end section 1106 of each clamping member 1003A, 1003B comprises an external screw thread arrangement 1107. A shoulder 1108 is present between the free end section 1106 and the body section 1105 of each clamping member 1003A, 1003B.

When the clamping members 1003A, 1003B are both in the closed condition, the end sections 1106 of the clamping members 1003A, 1003B together form a cylindrical, externally threaded portion. The cylindrical, externally threaded portion has a maximum diameter that is consistent in the longitudinal direction, and that has a central axis that is coincident with the longitudinal axis 1008 of the connector 1001. Thus, the end sections 1106 of the clamping members 1003A, 1003B together form a cylinder shape having opposite sides that each extend parallel to the longitudinal axis 1008 of the connector 1001.

It is to be appreciated that the end sections 1106 of the clamping members 1003A, 1003B together present a continuous screw thread profile, with the external screw thread arrangements 1107 of the clamping members 1003A, 1003B differing but in a complementary manner.

The clamping member fastener 1004 is usable to releasably secure the pivotable clamping members 1003A, 1003B in a closed condition.

In this example, the clamping member fastener 1004 comprises a substantially cylindrical ring member 2501 having an internal screw thread arrangement 2502, co-operable with the cylindrical, externally threaded portion, that enables the clamping member fastener 1004 to be screwed onto the clamping members 1003A, 1003B to lock them in a closed configuration (as shown at least in Figure 10).

The shoulder 1108 present between the free end section 1106 and the body section 1105 of each clamping member 1003A, 1003B provides a stop for the clamping member fastener 1004, this feature serving to prevent over-tightening.

Advantageously, the co-operating screw thread arrangements 1107, 2502 of the clamping members 1003A, 1003B and the clamping member fastener 1004 enables the clamping member fastener 1004 to be screwed fully into the securing position in less than 3 turns, more preferably in less than 2 turns, and in this example with approximately 1.25 turns. This feature of reducing the number of turns/degrees through which the clamping member fastener must be rotated is beneficial for reducing cross-threading, increasing speed of screwing into the securing position, and reducing physical strain, which is a particular concern for those with impaired dexterity.

Fastener rings of this type are well-known in the field of garden hose connectors.

Each clamping member 1003A, 1003B is provided with a gripping arrangement, such as gripping arrangement 1801 of clamping member 1003B, described in further detail below.

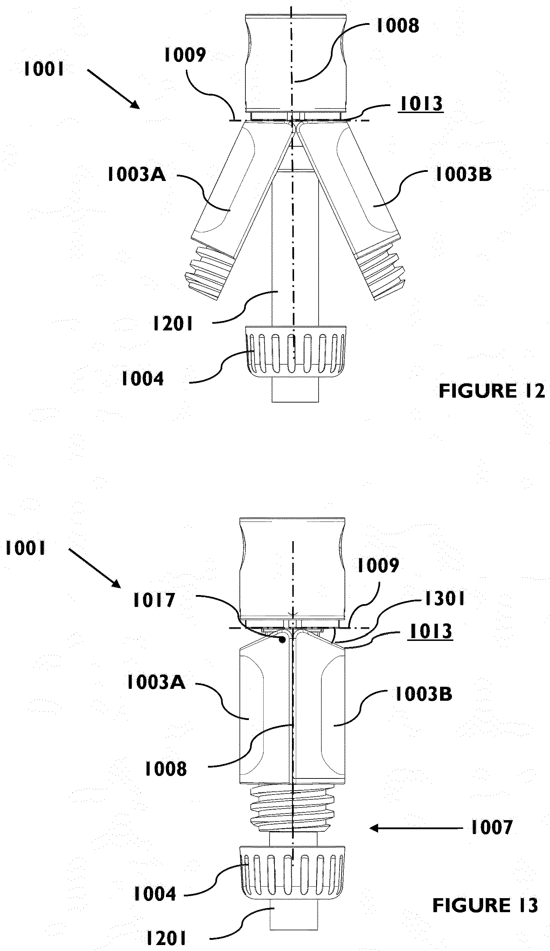

Stages of fitting the connector 1001 to a hose will now be described with reference to Figures 12-14.

The connector 1001 and a hose 1201 to which the connector 1001 is to be fitted are received.

The clamping member fastener 1004 is threaded onto the hose 1201, over a free end thereof, in an appropriate orientation.

With the clamping members 1003A, 1003B in the open position (as shown in Figure I I at least), the insert 1101 is then positioned inside the tubular cavity of the hose 1201, an appropriate distance. In an example, approximately 2.5cm of the length of the hose 1201 may be extended over the insert 1101 and approximately 5cm of the length of the hose 1201 is clamped by the clamping members 1003A, 1003B when in the closed configuration. In other examples, the insert may be configured to extend into a hose by at least 2cm, by at least 3cm, by at least 4cm, by at least 5cm by at least 7.5cm or by at least 10cm.

The clamping members 1003A, 1003B are then pivoted into the closed position (as shown in Figure 11 at least) such that the hose 1201 is clamped between the internal gripping arrangement 1801 each clamping member 1003A, 1003B and the exterior of the insert 1101.

The clamping member fastener 1004 (previously threaded onto the hose 1201) is then screwed onto the end sections of the clamping members 1003A, 1003B to lock them in the closed condition.

The connector 1001 is now fitted to the hose 1201 and may be used to connect the hose 1201 to a tap, for example.

To subsequently remove the connector 1001 from the hose 1201, the clamping member fastener 1004 is unscrewed from the clamping members 1003A, 1003B, the clamping members 1003A, 1003B are pivoted into the open condition, the insert 1101 is withdrawn from the hose 1201 and then the clamping member fastener 1004 is removed from the hose 1201.

Other features of the connector 1001 will now be described.

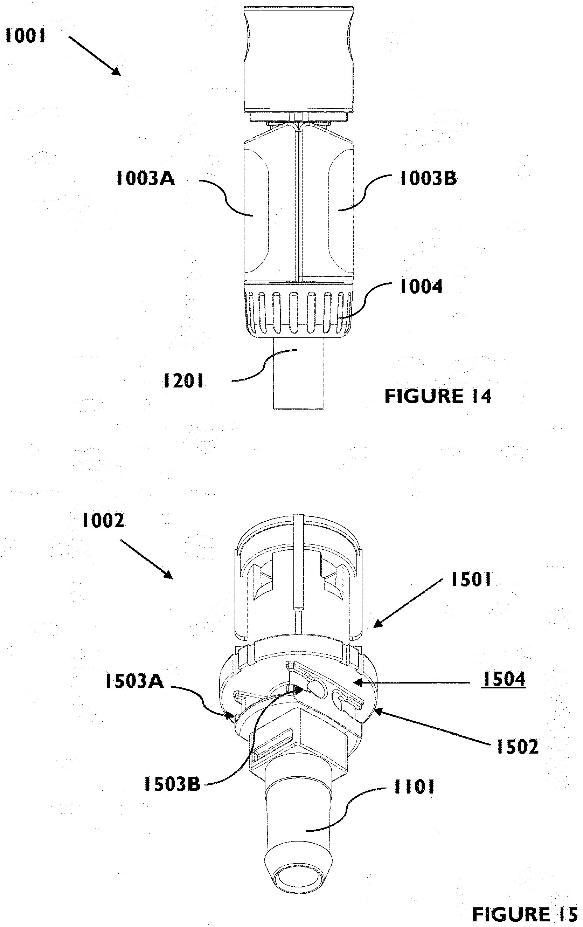

Referring now to Figures 12 & 13, in Figure 12 the clamping members 1003A, 1003B are shown in the open position in Figure 12 and in the closed position in Figure 13. A feature of the first end surface 1013 of the clamping members 1003A, 1003B can be seen clearly from comparison of these Figures. Looking firstly at Figure 13, when in the closed position, the first end surface 1013 of each clamping member 1003A, 1003B extends at an angle 1301 from the transverse direction, such that it is generally sloping outwards (of the longitudinal axis 1008) and downwards (towards the second end 1007). The effect of this outwardly and downwardly sloping of the first end surface 1013 is apparent when looking next at Figure 12, which shows that, when in the open position, the first end surface 1013 of each clamping member 1003A, 1003B extends in the transverse direction. Thus, the outwardly and downwardly sloping of the first end surface 1013 provides a generally triangular region in which there is no material to interfere with pivoting of the clamping members 1003A, 1003B from the closed position into the open position. Referring now also to Figure 15, it can be seen that the base end 1502 of the connection arrangement 1501 of the main body 1002 has a surface 1504 that provides a stop for rotation of the clamping members 1003A, 1003B during pivoting into the open position. The aforementioned features facilitate controlled pivoting of the clamping members 1003A, 1003B open, which is beneficial for proper operation of the connector 1001.

Referring again to Figure 15, it can be seen that the pairs of recesses of the main body 1002 for releasably receiving the pairs of nubs of the clamping members 1003A, 1003B, such as pair of recesses 1503A, 1503B for receiving pair of nubs 1601A, 1601B of clamping member 1003B, extend substantially in the transverse direction. This feature beneficially serves to prevent unintentional release of the clamping members from the main body 1002, stopping them from being pulled out in the event of a downward force being applied thereto, but to allow release in the event of too much pressure being placed on the clamping members 1003A, 1003B during pivoting into the closed position (for example in the event of an extraneous object becoming trapped between the clamping member(s) and the hose) or in the event of the connector 101 being dropped, to prevent snapping.

Both the arrangement of the recesses 10a of the connector 1 of the first example, which extend in the longitudinal direction, and those of the connector 1001 of the second example, which as just mentioned extend in the sideways/radial direction, allow a clamping member to be released from the main body for replacement or repair, such as in the event of damage for example.

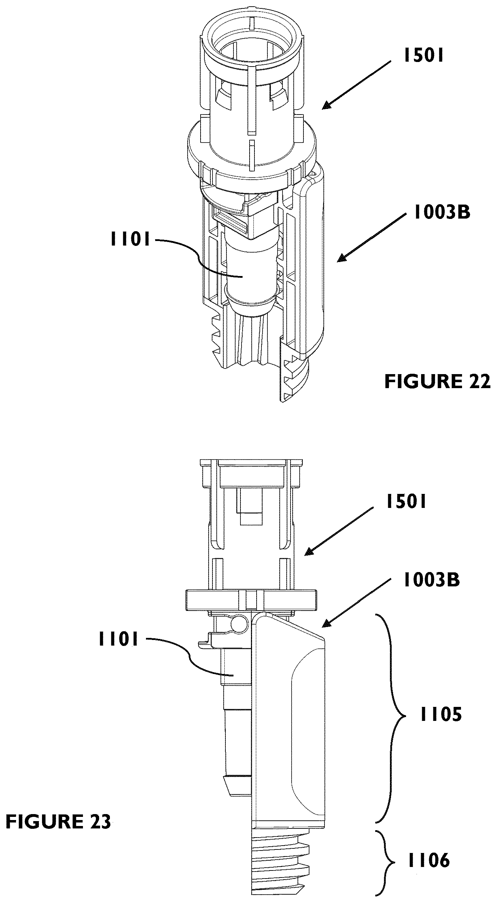

Referring now to Figure 23, it can be seen that with the clamping members (only clamping member 1003B is shown in this Figure) in the closed position, the insert 1101 terminates within the extent of the body section 1105. In other words, the length of the insert 1101 is such that it ends before, and does not project into, the end section 1106.

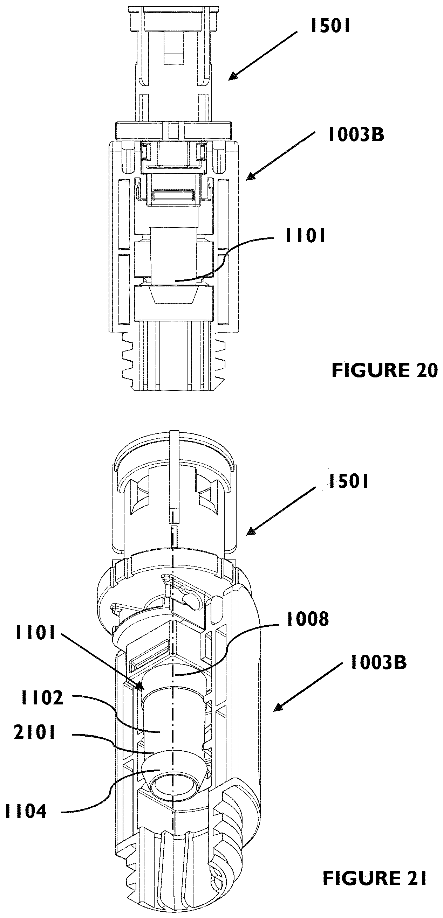

Referring now to Figure 21, it can be seen that an outer surface of each of the body portion 1102 and the terminal portion 1104 tapers inwardly (towards the longitudinal axis 1008) as the insert 1101 extends downwardly (away from the connection arrangement 1501/towards the second end 1007 of the connector) with a shoulder 2101 formed between the body portion 1102 and the terminal portion 1104 such that the end of the terminal portion 1104 closer to the first end 1006 of the connector 1001 has a diameter that is greater than the diameter of the end of the body portion 1102 that is closer to the second end 1007 of the connector 1001.

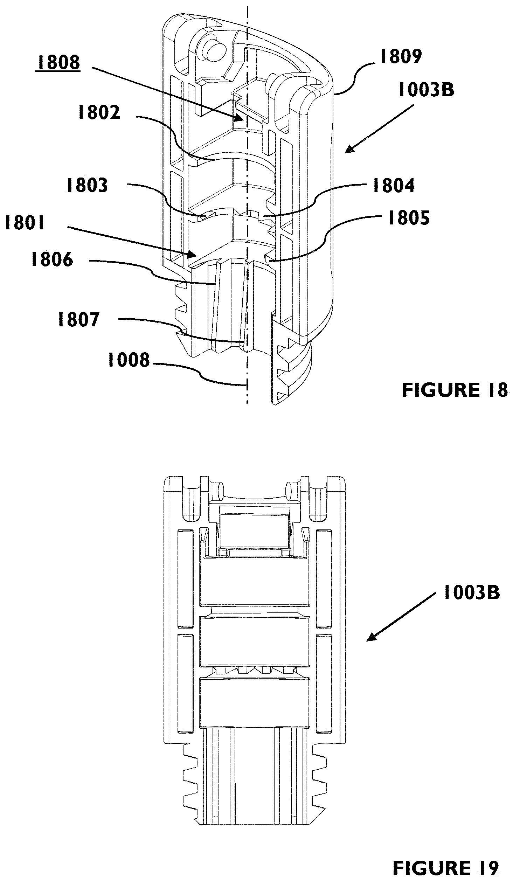

Referring now to Figure 18, it can be seen that the gripping arrangement 1801 comprises a plurality of grips. In this example, the gripping arrangement 1801 comprises generally circumferentially extending ribs 1802, 1803 that are spaced apart in the longitudinal direction. While the ribs 1802, 103 are shown disposed within the body section 1105, a grip may be located at the junction between the body section 1105 and the end section 1106. These ribs 1802, 1803, grip the hose 1201 onto the insert 1101 during and after fitting the connector 1001 thereto. In this example, at least one of the ribs, in this illustrated example at least rib 1803 present one or more tooth elements, such as tooth element 1804, or other gripping profile that project from the rib, to hold the hose 1201 in position more securely without harming it.

Beneficially, as the clamping members 1003A, 1003B present two sets of spaced apart grips, the hose 1201 is clamped in two separate places. This means that even if hose 1201 slips from one set of grips (ribs 1802), it may still be retained by another set of grips (ribs 1803).

The gripping arrangement 1801 further comprises a shoulder grip, such as rib 1805, which is positioned to locate beside the shoulder 2101 of the insert 1101 when the clamping member 1003A, 1003B is in the closed position (as shown in at least Figure 21). This feature serves beneficially to maintain a proper alignment of the clamping member 1003A, 1003B relative to the insert 1101 in addition to contributing to clamping a hose 1201 between the clamping member 1003A, 1003B and the insert 1101.

In this example, the gripping arrangement 1801 further comprises grips, such as generally axially extending supporting ribs 1806, 1807 that are spaced apart in the circumferential direction. These ribs 1806, 1807 gain purchase on the hose 1201 when the clamping members 1003A, 1003B are moved into the closed position, and serve to prevent undesirable relative movement between the hose 1201 and connector 1001, to improve stability of the fitting of the connector 1001 to the hose 1201.

The connector 1001 is designed to retain the connector 1001 on a hose 1201 securely without using unnecessary material that would undesirably increase the weight of the connector 1001.

By way of further detail, extending from an internal face 1808 of each clamping member 1003A, 1003B, which also have a semi-cylindrical outer wall 1809, and located intermediate the first and second ends 1012, 1015 of the clamping members 1003A, 1003B are positioned grips 1802, 1803.

Grips 1802, 1803 are each substantially planar, and extend in parallel planes that are substantially orthogonal to the longitudinal axis of clamping members 1003A, 1003B.

In an example, grips 1802, 1803 are spaced apart from each other by approximately 1cm. In other examples, the grips 1802, 1803 may be spaced apart by a distance in the region of 1cm to 4cm, or 2cm to 3cm.

Grips 1802, 1803 are each substantially C-shaped such that they define semi-circular recesses within which a hose 1201 may be clamped against the insert 1101.

Together the grip 1802 of clamping member 1003A and the corresponding grip 1802 of clamping member 1003B define a substantially circular recess within which a hose 1201 may be clamped.

Similarly, the grip 1803 of clamping member 1003A and the corresponding grip 1803 of clamping member 1003B define a substantially circular recess within which a portion of the hose 1201 may be clamped.

Grips 1806, 1807 are substantially linear and may be tilted relative to the longitudinal axis of the connector 1001 so as to provide improved resistance to a force applied to the clamped hose 1201 and/or connector 1001 that could pull the hose 1201 and connector 1001 apart.

It is to be appreciated that the gripping arrangements 1801 of the clamping members 1003A, 1003B may differ, but may differ in a complementary manner, for example so that at least one grip of one of the clamping members 1003A, 1003B offset from a like grip of the other of the clamping members 1003A, 1003B in the longitudinal direction. A grip of a gripping arrangement of a clamping member may have any suitable form, profile and dimensions, and each grip of a gripping arrangement of a clamping member may be positioned in any suitable arrangement relative to one or more other grips of that gripping arrangement and relative to one or more grips of the gripping arrangement of the other clamping member.

There has thus been described herein a garden hose connector that comprises a main body having an insert over which a free end of a hose may be positioned by a user and a pair of clamping members attached to the main body and moveable between an open position and a closed position. When the clamping members are in their open position a user may position the insert inside a free end of a hose or remove the insert therefrom. When the clamping members are in their closed position the clamping members are effective to clamp a portion of the hose against the insert. The connector further comprises a fastener configurable to releasably lock the clamping members in their closed position.

The garden hose connector may be made from any suitable materials or combination of materials, which may comprise one or more of a plastics material and a metal material. The garden hose connector may be manufactured using any suitable process or combination of processes. The garden hose connector may have any suitable dimensions and appearance. Surfaces of the garden hose connector that are expected to be handled manually may have any suitable profile and/or feel.

In this specification an apparatus/method/product "comprising" certain features is intended to be interpreted as meaning that it includes those features, but that it does not exclude the presence of other features. Many variations are possible without departing from the scope of the present invention as defined in the appended claims.

## Claims

1. A garden hose connector (1001), having a first end (1006) and a second end (1007), comprising:
a main body (1002) having an insert (1101) over which a free end of a hose (1201) may be positioned by a user;
a pair of clamping members (1003A, 1003B) pivotally attached to the main body (1002) and moveable between an open position and a closed position; wherein:
when the clamping members (1003A, 1003B) are in their open position a user may position the insert (1101) inside a free end of a hose (1201) or remove the insert (1101) therefrom;
when the clamping members (1003A, 1003B) are in their closed position the clamping members (1003A, 1003B) are effective to clamp a portion of the hose (1201) against the insert (1101);
a fastener (4) configurable to releasably lock the clamping members (1003A, 1003B) in their closed position;
each of the clamping members (1003A, 1003B) comprises a free end section (1106),
when the clamping members (1003A, 1003B) are in their closed position the free end sections (1106) of the clamping members (1003A, 1003B) together form an externally threaded portion, and
the fastener (1004) comprises a substantially cylindrical ring member (2501) having an internal screw thread arrangement (2502) co-operable with said externally threaded portion to enable the fastener (1004) to be screwed onto the clamping members (1003A, 1003B) to lock them in a closed configuration,
**characterised in that** the externally threaded portion is cylindrical.

2. The garden hose connector of claim 1, wherein the insert (1101) has a body portion (1102) that fluidly connects the first end (1006) of the connector (1001) to an outlet (1103) of a terminal portion (1104) of the insert (1110), and wherein the insert (1101) is substantially cylindrical and an outer surface of each of the body portion (1102) and the terminal portion (1104) tapers inwardly towards a longitudinal axis (1008) of the connector (1001) as the insert (1101) extends towards the second end (1007) of the connector (1001), with a shoulder (2101) formed between the body portion (1102) and the terminal portion (1104) such that the end of the terminal portion (1104) closer to the first end (1006) of the connector (1001) has a diameter that is greater than the diameter of the end of the body portion (1102) that is closer to the second end (1007) of the connector (1001).

3. The garden hose connector (1001) of claim 1 or claim 2, wherein each of the clamping members (1003A, 1003B) comprises a body section (1105), from which the free end section (1106) extends, and a shoulder (1108) present between the free end section (1006) and the body section (1105) of each clamping member (1003A, 1003B) provides a stop for the fastener (1004).

4. The garden hose connector (1001) of claim 3, wherein the insert (1101) terminates within the extent of the body section (1105) of each clamping member (1003A, 1003B).

5. The garden hose connector (1001) of any one of the preceding claims , wherein the clamping members (1003A, 1003B) are releasably attached at or adjacent first ends (1012) thereof to the main body (1002).

6. The garden hose connector (1001) of claim 5, wherein each clamping member (1003A, 1003B) comprises a pair of nubs (1601A, 1601B) that are configured to releasably mate with corresponding pairs of recesses (1503A, 1503B) on the main body (1002).

7. The garden hose connector (1001) of claim 6, wherein the pairs of recesses (1503A, 1503B) of the main body (1002) for releasably receiving the pairs of nubs (1601A, 1601B) of the clamping members (1003A, 1003B) extend substantially in the transverse direction of the connector (1001).

8. The garden hose connector (1001) of any one of the preceding claims, wherein each clamping member (1003A, 1003B) has a first end surface (1013), and
when in the closed position, the first end surface (1013) of each clamping member (1003A, 1003B) extends at an angle from the transverse direction of the connector (1001) such that it is generally sloping outwards of the longitudinal axis (1008) of the connector (1001) and towards the second end (1007) of the connector (1001), and
when in the open position, the first end surface (1013) of each clamping member (1003A, 1003B) extends in the transverse direction.

9. The garden hose connector (1001) of any one of the preceding claims, wherein the main body (1002) comprises, at the first end (1006) of the connector (1001), a snap-fit assemblage (1010) comprising an inner connection arrangement (1501) and an outer connection collar (1005) that are co-operable to together provide a female part of a two-part snap-fit releasable connection arrangement, that is usable to releasably attach the connector (1001) to a corresponding male part of the two-part snap-fit releasable connection arrangement associated with another object such as a tap adaptor, spray nozzle, sprinkler, or the like.

10. The garden hose connector (1001) of claims 8 and 9, wherein a base end (1502) of the inner connection arrangement (1501) of the main body (1002) has a surface (1504) that provides a stop for rotation of the clamping members (1003A, 1003B) during pivoting into the open position.

11. The garden hose connector (1001) of any one of the preceding claims, wherein each clamping member (1003A, 1003B) is substantially semicylindrical.

12. The garden hose connector (1001) of any one of the preceding claims, wherein each clamping member (1003A, 1003B) comprises a gripping arrangement (1801) comprising at least one grip (1802, 1803) on an internal face (1808) of the clamping member (1003A, 1003B), the at least one grip (1802, 1803) being adapted to clamp the hose (1201) against the insert (1101).

13. The garden hose connector (1001) of claim 12, wherein a grip (1802) on a first clamping member (1003A) and a grip (1802) on a second clamping member (1003B) together define a substantially circular recess within which hose (1201) is clamped.

14. The garden hose connector (1001) of claim 12 or claim 13, wherein the gripping arrangement (1801) of each clamping member (1003A, 1003B) comprises a plurality of grips (1802, 1803) that are spaced apart in one or both of: a longitudinal direction of the clamping member (1003A, 1003B), a circumferential direction of the clamping member (1003A, 1003B).

15. The garden hose connector (1001) of any one of claims 12 to 14 when dependent upon claim 2, wherein the gripping arrangement (180I) of each clamping member (1003A, 1003B) comprises a shoulder grip (1805) positioned to locate beside the shoulder (2101) of the insert (1101) when the clamping member (1003A, 1003B) is in the closed position.

## Patentansprüche

1. Gartenschlauchverbinder (1001) mit einem ersten Ende (1006) und einem zweiten Ende (1007), umfassend:
einen Hauptkörper (1002) mit einem Einsatz (1101), über den ein Benutzer ein freies Ende eines Schlauchs (1201) positionieren kann,
ein Paar Klemmglieder (1003A, 1003B), die schwenkbar an dem Hauptkörper (1002) angebracht und zwischen einer offenen Position und einer geschlossenen Position beweglich sind, wobei:
ein Benutzer den Einsatz (1101) in einem freien Ende eines Schlauchs (1201) positionieren oder den Einsatz (1101) daraus entfernen kann, wenn sich die Klemmglieder (1003A, 1003B) in ihrer offenen Position befinden,
die Klemmglieder (1003A, 1003B) dahingehend wirksam sind, wenn sich die Klemmglieder (1003A, 1003B) in ihrer geschlossenen Position befinden, einen Abschnitt des Schlauchs (1201) an den Einsatz (1101) zu klemmen,
ein Befestigungselement (4), das dazu ausgestaltet werden kann, die Klemmglieder (1003A, 1003B) lösbar in ihrer geschlossenen Position zu verriegeln,
wobei jedes der Klemmglieder (1003A, 1003B) einen freien Endabschnitt (1106) umfasst,
wobei die freien Endabschnitte (1106) der Klemmglieder (1003A, 1003B) zusammen einen Außengewindeabschnitten bilden, wenn sich die Klemmglieder (1003A, 1003B) in ihrer geschlossenen Position befinden, und
das Befestigungselement (1004) ein im Wesentlichen zylindrisches Ringglied (2501) mit einer Innengewindeanordnung (2502) umfasst, die mit dem Außengewindeabschnitt zusammenwirken kann, damit das Befestigungselement (1004) auf die Klemmglieder (1003A, 1003B) aufgeschraubt werden kann, um sie in einer geschlossenen Konfiguration zu verriegeln, **dadurch gekennzeichnet, dass** der Außengewindeabschnitt zylindrisch ist.

2. Gartenschlauchverbinder nach Anspruch 1, wobei der Einsatz (1101) einen Körperabschnitt (1102) aufweist, der das erste Ende (1006) des Verbinders (1001) fluidisch mit einem Auslass (1103) eines Anschlussabschnitts (1104) des Einsatzes (1110) verbindet, und wobei der Einsatz (1101) im Wesentlichen zylindrisch ist und sich eine Außenfläche sowohl des Körperabschnitts (1102) als auch des Anschlussabschnitts (1104) nach innen zu einer Längsachse (1008) des Verbinders (1001) hin verjüngt, wenn sich der Einsatz (1101) zu dem zweiten Ende (1007) des Verbinders (1001) hin erstreckt, wobei eine Schulter (2101) zwischen dem Körperabschnitt (1102) und dem Anschlussabschnitt (1104) gebildet ist, so dass das Ende des Anschlussabschnitts (1104), das näher an dem ersten Ende (1006) des Verbinders (1001) liegt, einen Durchmesser aufweist, der größer als der Durchmesser des Endes des Körperabschnitts (1102) ist, das näher an dem zweiten Ende (1007) des Verbinders (1001) liegt.

3. Gartenschlauchverbinder (1001) nach Anspruch 1 oder Anspruch 2, wobei jedes der Klemmglieder (1003A, 1003B) einen Körperabschnitt (1105) umfasst, von dem sich der freie Endabschnitt (1106) erstreckt, und eine Schulter (1108), die zwischen dem freien Endabschnitt (1006) und dem Körperabschnitt (1105) jedes Klemmglieds (1003A, 1003B) vorhanden ist, einen Anschlag für das Befestigungselement (1004) bereitstellt.

4. Gartenschlauchverbinder (1001) nach Anspruch 3, wobei der Einsatz (1101) innerhalb der Ausdehnung des Körperabschnitts (1105) jedes Klemmglieds (1003A, 1003B) endet.

5. Gartenschlauchverbinder (1001) nach einem der vorhergehenden Ansprüche, wobei die Klemmglieder (1003A, 1003B) an erste Enden (1012) davon lösbar an dem Hauptkörper (1002) oder diesem benachbart angebracht sind.

6. Gartenschlauchverbinder (1001) nach Anspruch 5, wobei jedes Klemmglied (1003A, 1003B) ein Paar Noppen (1601A, 1601B) umfasst, die dazu ausgestaltet sind, lösbar mit entsprechenden Paaren von Aussparungen (1503A, 1503B) an dem Hauptkörper (1002) zusammenzupassen.

7. Gartenschlauchverbinder (1001) nach Anspruch 6, wobei sich die Paare von Aussparungen (1503A, 1503B) des Hauptkörpers (1002) zum lösbaren Aufnehmen der Paare von Noppen (1601A, 1601B) der Klemmglieder (1003A, 1003B) im Wesentlichen in der Querrichtung des Verbinders (1001) erstrecken.

8. Gartenschlauchverbinder (1001) nach einem der vorhergehenden Ansprüche, wobei jedes Klemmglied (1003A, 1003B) eine erste Endfläche (1013) aufweist, und
sich die erste Endfläche (1013) jedes Klemmglieds (1003A, 1003B), wenn sie in der geschlossenen Position sind, in einem Winkel zu der Querrichtung des Verbinders (1001) erstreckt, so dass sie allgemein von der Längsachse (1008) des Verbinders (1001) nach außen und zu dem zweiten Ende (1007) des Verbinders (1001) hin geneigt ist, und
sich die erste Endfläche (1013) jedes Klemmglieds (1003A, 1003B), wenn sie in der offenen Position sind, in der Querrichtung erstreckt.

9. Gartenschlauchverbinder (1001) nach einem der vorhergehenden Ansprüche, wobei der Hauptkörper (1002) an dem ersten Ende (1006) des Verbinders (1001) eine Schnappverbindungsanordnung (1010) umfasst, die eine innere Verbindungsanordnung (1501) und einen äußeren Verbindungsbund (1005) umfasst, die zusammenwirken können, um zusammen ein Aufnahmeteil einer lösbaren zweiteiligen Schnappverbindungsanordnung bereitzustellen, die zum lösbaren Befestigen des Verbinders (1001) an einem entsprechenden Steckteil der lösbaren zweiteiligen Schnappverbindungsanordnung dienen kann, die einem anderen Gegenstand wie einem Hahnadapter, einer Sprühdüse, einem Sprinkler oder dergleichen zugeordnet ist.

10. Gartenschlauchverbinder (1001) nach Ansprüchen 8 und 9, wobei ein Basisende (1502) der inneren Verbindungsanordnung (1501) des Hauptkörpers (1002) eine Fläche (1504) aufweist, die einen Anschlag für die Drehung der Klemmglieder (1003A, 1003B) während des Schwenkens in die offene Position bereitstellt.

11. Gartenschlauchverbinder (1001) nach einem der vorhergehenden Ansprüche, wobei jedes Klemmglied (1003A, 1003B) im Wesentlichen halbzylindrisch ist.

12. Gartenschlauchverbinder (1001) nach einem der vorhergehenden Ansprüche, wobei jedes Klemmglied (1003A, 1003B) eine Greifanordnung (1801) umfasst, die mindestens einen Griff (1802, 1803) an einer Innenfläche (1808) des Klemmglieds (1003A, 1003B) umfasst, wobei der mindestens eine Griff (1802, 1803) dazu ausgelegt ist, den Schlauch (1201) an den Einsatz (1101) zu klemmen.

13. Gartenschlauchverbinder (1001) nach Anspruch 12, wobei ein Griff (1802) an einem ersten Klemmglied (1003A) und ein Griff (1802) an einem zweiten Klemmglied (1003B) zusammen eine im Wesentlichen kreisförmige Aussparung definieren, in der der Schlauch (1201) geklemmt ist.

14. Gartenschlauchverbinder (1001) nach Anspruch 12 oder Anspruch 13, wobei die Greifanordnung (1801) jedes Klemmglieds (1003A, 1003B) eine Vielzahl von Griffen (1802, 1803) umfasst, die in einer Längsrichtung des Klemmglieds (1003A, 1003B) und/oder einer Umfangsrichtung des Klemmglieds (1003A, 1003B) beabstandet sind.

15. Gartenschlauchverbinder (1001) nach einem der Ansprüche 12 bis 14, wenn von Anspruch 2 abhängig, wobei die Greifanordnung (1801) jedes Klemmglieds (1003A, 1003B) einen Schultergriff (1805) umfasst, der so positioniert ist, dass er sich neben der Schulter (2101) des Einsatzes (1101) positioniert, wenn sich das Klemmglied (1003A, 1003B) in der geschlossenen Position befindet.

## Revendications

1. Raccord de tuyau d'arrosage (1001), comportant une première extrémité (1006) et une seconde extrémité (1007), comprenant :
un corps principal (1002) comportant une pièce pour insertion (1101) sur laquelle un utilisateur peut placer une extrémité libre d'un tuyau (1201) ;
une paire d'éléments de serrage (1003A, 1003B) attachés de manière pivotante au corps principal (1002) et déplaçables entre une position ouverte et une position fermée ; où :
lorsque les éléments de serrage (1003A, 1003B) se trouvent dans leur position ouverte, un utilisateur peut placer la pièce pour insertion (1101) à l'intérieur d'une extrémité libre d'un tuyau (1201) ou retirer la pièce pour insertion (1101) de celle-ci ;
lorsque les éléments de serrage (1003A, 1003B) se trouvent dans leur position fermée, les éléments de serrage (1003A, 1003B) agissent pour serrer une partie du tuyau (1201) contre la pièce pour insertion (1101) ;
un élément de fixation (4) pouvant être conçu pour bloquer de manière libérable les éléments de serrage (1003A, 1003B) dans leur position fermée ;
chacun des éléments de serrage (1003A, 1003B) comprend une section d'extrémité libre (1106),
lorsque les éléments de serrage (1003A, 1003B) se trouvent dans leur position fermée, les sections d'extrémités libres (1106) des éléments de serrage (1003A, 1003B) forment conjointement une partie à filetage extérieur, et
l'élément de fixation (1004) comprend un élément annulaire sensiblement cylindrique (2501) comportant une structure de filetage intérieur (2502) propre à coopérer avec ladite partie à filetage extérieur afin de permettre à l'élément de fixation (1004) d'être vissé sur les éléments de serrage (1003A, 1003B) pour les bloquer dans une configuration fermée, **caractérisé en ce que** la partie à filetage extérieur est cylindrique.

2. Raccord de tuyau d'arrosage selon la revendication 1, dans lequel la pièce pour insertion (1101) comporte une partie corps (1102) qui raccorde fluidiquement la première extrémité (1006) du raccord (1001) à une sortie (1103) d'une partie terminale (1104) de la pièce pour insertion (1110), et dans lequel la pièce pour insertion (1101) est sensiblement cylindrique et une surface extérieure de chacune de la partie corps (1102) et de la partie terminale (1104) s'effile en direction d'un axe longitudinal (1008) du raccord (1001) à mesure que la pièce pour insertion (1101) s'étend en direction de la seconde extrémité (1007) du raccord (1001), un épaulement (2101) étant formé entre la partie corps (1102) et la partie terminale (1104) de telle sorte que l'extrémité de la partie terminale (1104) située plus près de la première extrémité (1006) du raccord (1001) présente un diamètre qui est supérieur au diamètre de l'extrémité de la partie corps (1102) située plus près de la seconde extrémité (1007) du raccord (1001).

3. Raccord de tuyau d'arrosage (1001) selon la revendication 1 ou la revendication 2, dans lequel chacun des éléments de serrage (1003A, 1003B) comprend une section de corps (1105), à partir de laquelle s'étend la section d'extrémité libre (1106), et un épaulement (1108) présent entre la section d'extrémité libre (1006) et la section de corps (1105) de chaque élément de serrage (1003A, 1003B) constitue une butée pour l'élément de fixation (1004).

4. Raccord de tuyau d'arrosage (1001) selon la revendication 3, dans lequel la pièce pour insertion (1101) se termine dans les limites de l'étendue de la section de corps (1105) de chaque élément de serrage (1003A, 1003B).

5. Raccord de tuyau d'arrosage (1001) selon l'une quelconque des revendications précédentes, dans lequel les éléments de serrage (1003A, 1003B) sont attachés de manière libérable au corps principal (1002) au niveau ou à proximité de premières extrémités (1012) de ceux-ci.

6. Raccord de tuyau d'arrosage (1001) selon la revendication 5, dans lequel chaque élément de serrage (1003A, 1003B) comprend une paire de protubérances (1601A, 1601B) qui sont conçues pour s'accoupler de manière libérable avec des paires correspondantes de renfoncements (1503A, 1503B) sur le corps principal (1002).

7. Raccord de tuyau d'arrosage (1001) selon la revendication 6, dans lequel les paires de renfoncements (1503A, 1503B) du corps principal (1002) destinés à recevoir de manière libérable les paires de protubérances (1601A, 1601B) des éléments de serrage (1003A, 1003B) s'étendent sensiblement dans la direction transversale du raccord (1001).

8. Raccord de tuyau d'arrosage (1001) selon l'une quelconque des revendications précédentes, dans lequel chaque élément de serrage (1003A, 1003B) comporte une première surface d'extrémité (1013), et
dans la position fermée, la première surface d'extrémité (1013) de chaque élément de serrage (1003A, 1003B) s'étend de façon à former un angle avec la direction transversale du raccord (1001) de telle sorte qu'elle soit globalement inclinée vers l'extérieur relativement à l'axe longitudinal (1008) du raccord (1001) et en direction de la seconde extrémité (1007) du raccord (1001), et
dans la position ouverte, la première surface d'extrémité (1013) de chaque élément de serrage (1003A, 1003B) s'étend dans la direction transversale.

9. Raccord de tuyau d'arrosage (1001) selon l'une quelconque des revendications précédentes, dans lequel le corps principal (1002) comprend, au niveau de la première extrémité (1006) du raccord (1001), un assemblage à emboîtement élastique (1010) comprenant une structure de raccordement intérieure (1501) et un manchon de raccordement extérieur (1005) qui sont propres à coopérer pour constituer conjointement une partie femelle d'une structure de raccordement libérable à emboîtement élastique en deux parties, qui est propre à être utilisée pour attacher de manière libérable le raccord (1001) à une partie mâle correspondante de la structure de raccordement libérable à emboîtement élastique en deux parties associée à un autre objet tel qu'un adaptateur de robinet, un pistolet d'arrosage, un asperseur, ou similaire.

10. Raccord de tuyau d'arrosage (1001) selon les revendications 8 et 9, dans lequel une extrémité de base (1502) de la structure de raccordement intérieure (1501) du corps principal (1002) comporte une surface (1504) qui constitue une butée de rotation pour les éléments de serrage (1003A, 1003B) lors du pivotement vers la position ouverte.

11. Raccord de tuyau d'arrosage (1001) selon l'une quelconque des revendications précédentes, dans lequel chaque élément de serrage (1003A, 1003B) est sensiblement semi-cylindrique.

12. Raccord de tuyau d'arrosage (1001) selon l'une quelconque des revendications précédentes, dans lequel chaque élément de serrage (1003A, 1003B) comprend une structure de préhension (1801) comprenant au moins un élément de préhension (1802, 1803) sur une face intérieure (1808) de l'élément de serrage (1003A, 1003B), l'au moins un élément de préhension (1802, 1803) étant propre à serrer le tuyau (1201) contre la pièce pour insertion (1101).

13. Raccord de tuyau d'arrosage (1001) selon la revendication 12, dans lequel un élément de préhension (1802) sur un premier élément de serrage (1003A) et un élément de préhension (1802) sur un second élément de serrage (1003B) définissent conjointement une gorge sensiblement circulaire à l'intérieur de laquelle le tuyau (1201) est serré.

14. Raccord de tuyau d'arrosage (1001) selon la revendication 12 ou la revendication 13, dans lequel la structure de préhension (1801) de chaque élément de serrage (1003A, 1003B) comprend une pluralité d'éléments de préhension (1802, 1803) mutuellement espacés : dans une direction longitudinale de l'élément de serrage (1003A, 1003B) et/ou dans une direction circonférentielle de l'élément de serrage (1003A, 1003B).

15. Raccord de tuyau d'arrosage (1001) selon l'une quelconque des revendications 12 à 14 lorsqu'elle dépend de la revendication 2, dans lequel la structure de préhension (1801) de chaque élément de serrage (1003A, 1003B) comprend un élément de préhension d'épaulement (1805) positionné de façon à se trouver à côté de l'épaulement (2101) de la pièce pour insertion (1101) lorsque l'élément de serrage (1003A, 1003B) se trouve dans la position fermée.
